## Europäisches Patentamt

## European Patent Office

## Office européen des brevets

(19)

(11) Numéro de publication: **0 110 763**
**B1**

(12)

# FASCICULE DE BREVET EUROPÉEN

(45) Date de publication du fascicule du brevet:
**10.06.87**

(51) Int. Cl.⁴: **F 25 B 33/00,** F 24 J 3/00,
F 24 D 3/00

(21) Numéro de dépôt: **83402218.8**

(22) Date de dépôt: **18.11.83**

(54) Perfectionnements à une installation de chauffage équipée d'une pompe à chaleur à absorption.

(30) Priorité: **22.11.82 FR 8219510**

(43) Date de publication de la demande:
**13.06.84 Bulletin 84/24**

(45) Mention de la délivrance du brevet:
**10.06.87 Bulletin 87/24**

(84) Etats contractants désignés:
**AT BE CH DE GB IT LI LU NL SE**

(56) Documents cité:
**EP-A-0 028 343**
**EP-A-0 031 439**
**EP-A-0 050 788**
**DE-A-2 552 538**
**DE-A-2 648 855**
**DE-A-2 807 990**
**DE-A-2 913 066**
**DE-A-2 942 932**
**GB-A-2 044 907**
**US-A-3 828 575**
**US-A-4 291 545**

(73) Titulaire: **GAZ DE FRANCE, 23, rue Philibert Delorme, F-75017 Paris (FR)**

(72) Inventeur: **Florette, Marc, 62, Rue Doudeauville, F-75018 Paris (FR)**
Inventeur: **Junet, Roland, 85, Rue Alexandre Dumas, F-75020 Paris (FR)**
Inventeur: **Vignes, Roger, 13, Rue de Turin, F-75008 Paris (FR)**

(74) Mandataire: **Lerner, François, 5, rue Jules Lefebvre, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

La présente invention a pour objet une installation de chauffage d'un fluide équipée d'une pompe à chaleur à absorption.

Dans certaines installations de chauffage d'un fluide, tel par exemple que de l'eau, en particulier pour le chauffage de bâtiments et la production d'eau chaude sanitaire, installations comprenant au moins un brûleur à combustible solide, liquide et/ou gazeux produisant des "fumées" à température relativement élevée, on utilise parfois une pompe à chaleur à absorption afin d'améliorer le rendement thermique du chauffage.

Dans un tel cas habituellement, le brûleur sert à faire bouillir la solution d'absorption utilisée dans le cycle d'absorption de la pompe à chaleur de façon à séparer les constituants de la solution et régénérer le fluide d'absorption utilisé dans le cycle.

Au niveau de l'échange de chaleur fumées/solution d'absorption à régénérer, le rendement est médiocre du fait que compte tenu des conditions de l'échange thermique les fumées quittent l'installation à une température généralement élevée supérieure à 200°C entraînant à la cheminée de grandes quantités d'énergie qui sont perdues.

Dans la plupart des cas cette situation défavorable est tolérée car au niveau du cycle de la pompe à chaleur on récupère dans le milieu ambiant au niveau de l'évaporateur du cycle nettement plus d'énergie qu'on en a laissé échapper à la cheminée, de sorte que le rendement global de l'installation apparaît relativement bon. Ceci n'est cependant vrai que si les conditions de fonctionnement de l'évaporateur sont satisfaisantes, c'est-à-dire généralement si le niveau de la "source froide" dans laquelle est "pompée" la chaleur délivrée à l'installation est suffisamment élevée. Ce phénomène bien connu conduit du reste les installateurs à installer en parallèle sur l'installation de chauffage équipée d'une pompe à chaleur une chaudière de type classique qui chauffera directement le fluide à chauffer lorsque les conditions d'exploitation de la source froide seront défavorables (généralement par temps froids plus particulièrement si l'évaporateur emprunte sa chaleur à l'air ambiant).

De façon à réduire les pertes de chaleur à la cheminée, il a également été proposé de disposer le bouilleur d'une pompe à absorption et des échangeurs récupérateurs de chaleur sur le circuit des fumées.

Une telle installation du type défini dans la première partie de la revendication 1 est par exemple décrite au document DE-A-2 648 855. En pratique, cependant de telles installations ne donnent pas entièrement satisfaction car le nombre d'étages d'échange thermique et leur disposition sur le circuit d'évacuation des fumées ne permet pas d'obtenir un rendement thermodynamique optimal, notamment lorsque les conditions de fonctionnement du circuit de la pompe à chaleur sont défavorables.

Du document EP-A-0 050 788 il est également connu dans une installation de chauffage utilisant une pompe à chaleur de chauffer d'abord sur le circuit des fumées le bouilleur-séparateur de la pompe à chaleur, et vers la sortie des fumées, les retours froids du fluide à chauffer.

Mais aucune de ces installations ne présente de solution simple, souple et de bon rendement d'emploi lors de conditions défavorables de fonctionnement du cycle de la pompe à chaleur (particulièrement par temps froid). En outre, ces installations ne permettent pas un fonctionnement en simple chaudière sans cycle à absorption, lorsque les conditions de fonctionnement de la pompe à chaleur ne sont pas favorable.

L'invention a pour objet, dans une installation de chauffage équipée d'une pompe à chaleur à absorption du type précité, de résoudre les difficultés exposées, cela d'une façon efficace en proposant une installation compacte présentant en outre, certains avantages spécifiques qui apparaîtront plus loin.

Conformément à l'invention, il est proposé une installation de chauffage d'un fluide tel par exemple que de l'eau, en particulier pour le chauffage de bâtiments et la production d'eau chaude sanitaire du type comprenant, au moins, un brûleur à combustion solide, liquide et/ou gazeux produisant, dans une chambre de combustion, des fumées à température relativement élevées qui sont évacuées; un circuit de pompe à chaleur à absorption dans lequel circule la solution d'absorption et le réfrigérant et comprenant en série un condenseur, un évaporateur, un absorbeur, en soi connus, un premier échangeur de chaleur formant un premier étage et constituant le bouilleur de la pompe à chaleur placé sur le circuit d'évacuation des fumées et destiné à être rencontré par les fumées produites dans la chambre de combustion, pour porter à température élevée d'abord la solution d'absorption; et un circuit de chauffage dudit fluide à chauffer comprenant également en série, outre lesdits absorbeur et condenseur, un second échangeur de chaleur formant récupérateur également placé sur le circuit d'évacuation des fumées; ladite installation étant caractérisée en ce que:

- ledit second échangeur de chaleur forme le deuxième et dernier étage rencontré par les fumées sur leur circuit d'évacuation, pour réchauffer le fluide à chauffer dès son entrée dans le circuit de chauffage,

- ledit premier échangeur de chaleur est relié, vers l'extrémité d'entrée des fumées, à un ballon séparateur communiquant avec le volume du bouilleur dans lequel est chauffé, au niveau dudit échangeur de chaleur, ladite solution d'absorption,

et en ce qu'elle comprend:

- un circuit de dérivation de la solution d'absorption qui est disposé en parallèle sur ledit circuit d'absorption entre ledit ballon séparateur et l'entrée dudit premier échangeur de chaleur, ledit circuit de dérivation comprenant un échangeur de chaleur supplémentaire qui reçoit, lorsqu'une partie dudit circuit d'absorption est court-circuitée par une première vanne de dérivation située entre ledit échangeur de chaleur supplémentaire et l'entrée dudit premier échangeur de chaleur, et lorsqu'une partie dudit circuit de chauffage du fluide à chauffer est également court- circuitée au moyen d'une seconde vanne disposée entre la sortie dudit deuxième échangeur de chaleur et l'échangeur de chaleur supplémentaire,

d'une part la solution d'absorption issue dudit ballon séparateur,

et d'autre part, le fluide à chauffer à sa sortie dudit second échangeur.

Il apparaît ainsi que sans difficultés technologiques, sans multiplication des échangeurs, par simple allongement en quelque sorte de l'échangeur du premier étage, il va être possible de refroidir efficacement les fumées en récupérant la plus grande partie de leur chaleur latente et même la chaleur de condensation de l'eau contenue dans les fumées lorsque, comme c'est le cas le plus général, les retours froids du fluide à chauffer sont à température suffisamment basse, et en outre, par simple prévision d'un circuit de dérivation et d'un échangeur de chaleur supplémentaire qui ne sont utilisés que lorsque les conditions de fonctionnement de la pompe à chaleur ne sont pas favorables, il devient possible sans prévision d'un brûleur ou d'une chaudière d'appoint de faire fonctionner l'installation en simple chaudière sans cycle à absorption.

Selon un mode de construction préféré permettant la réalisation d'une unité particulièrement compacte, les différents échangeurs de chaleur que comporte l'installation sont constitués par des serpentins s'enroulant en hélice autour d'un noyau que formera avantageusement l'absorbeur de la pompe à chaleur.

L'invention et sa mise en oeuvre apparaîtront plus clairement à l'aide de la description qui va suivre faite en référence aux dessins annexés dans lesquels:

- la figure 1 représente un schéma d'ensemble d'une installation construite selon l'invention,

- la figure 2 montre à plus grande échelle la constitution des deux étages d'échangeur sus-mentionnés montés en série,

- la figure 3 montre en vue perspective de façon schématique et avec arrachements comment sont avantageusement disposés les différents organes de l'installation.

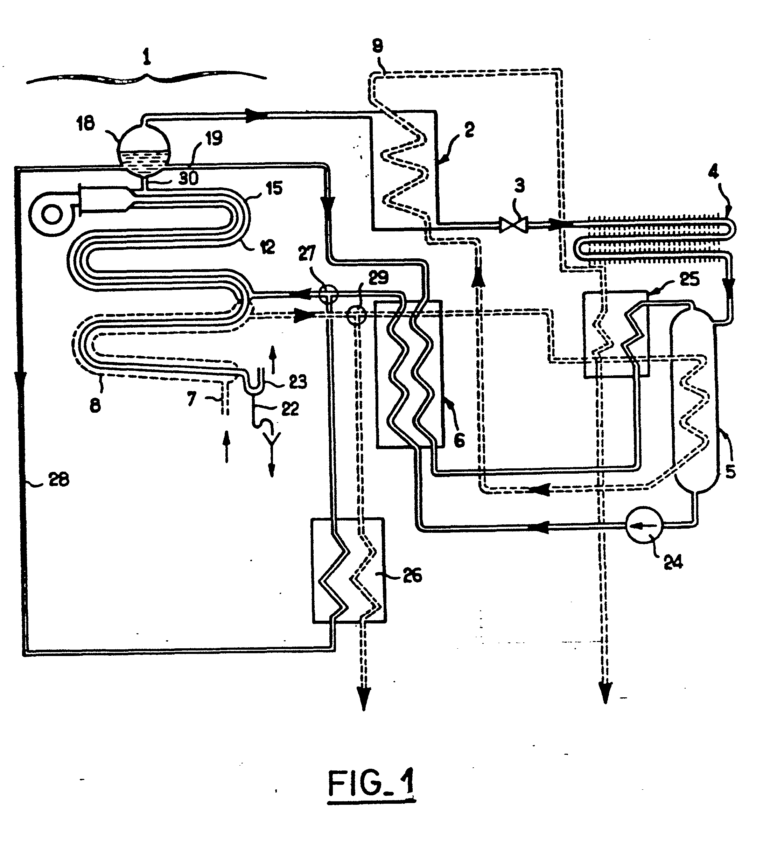

On se reportera tout d'abord à la figure 1.

L'installation comprend essentiellement le cycle de la pompe à absorption comprenant le bouilleur-régénérateur 1, le condenseur 2, le détendeur 3, l'évaporateur 4, l'absorbeur 5, et un échangeur de solutions 6. L'installation comprend d'autre part, le circuit de chauffage du fluide à chauffer par exemple de l'eau, avec l'entrée des retours froids en 7 dans l'échangeur-récupérateur de chaleur 8, un pré-chauffage dans l'absorbeur 5 au contact de la solution d'absorption puis le chauffage principal au niveau du condenseur 2 en échange de chaleur avec la partie évaporée qui est portée à haute température du cycle d'absorption. Le départ chaud se fait en 9. Sur le dessin on a différencié le circuit de l'eau par un trait tireté.

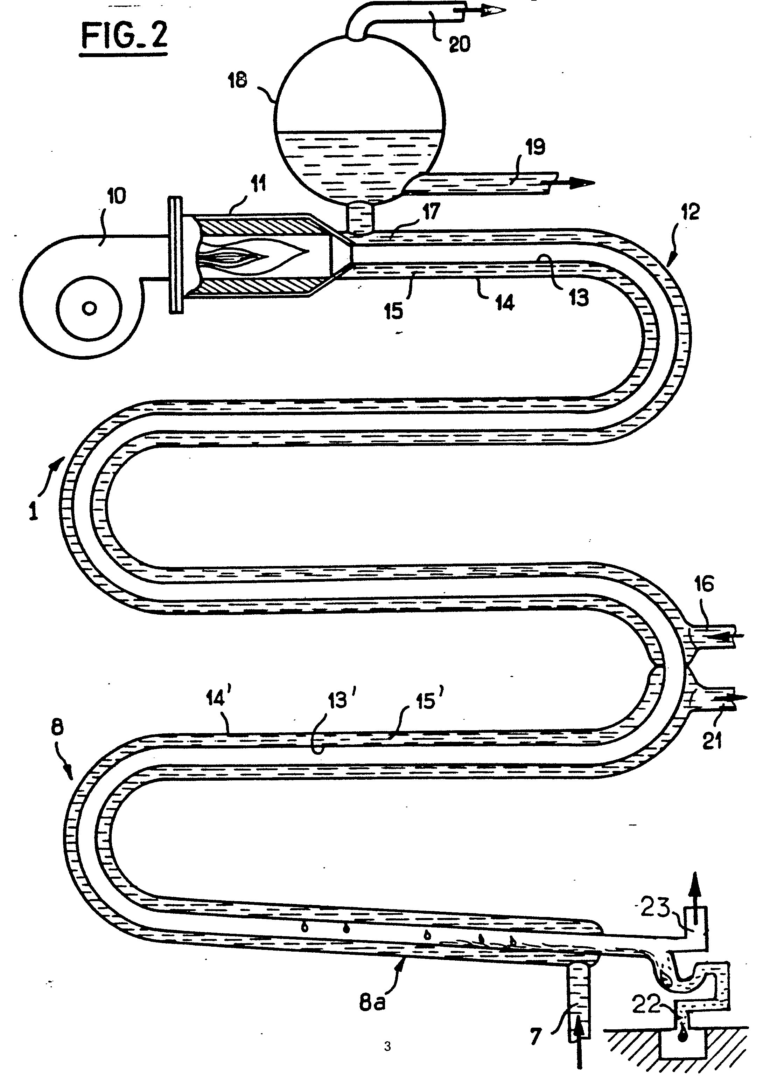

Comme il apparaît plus clairement à la figure 2 le bouilleur-générateur 1 comprend un brûleur 10, par exemple à gaz développant une flamme dans une chambre 11 de combustion. Evidemment tout autre brûleur à combustible liquide et/ou solide peut être utilisé, l'avantage du brûleur à gaz étant sa simplicité de mise en place et de régulation. Les produits de la combustion ou "fumées" chauds pénètrent alors dans l'échangeur de chaleur 12 servant à régénérer la solution d'absorption du cycle en la portant à température suffisamment élevée, par exemple vers 150°C. L'échangeur 12 dans l'exemple illustré est constitué essentiellement d'un tube intérieur 13 dans lequel circulent les fumées, lequel tube est logé à l'intérieur d'un tube 14 de plus grande section. Dans le volume 15 compris entre les deux tubes 13 et 14 circule dans le sens des flèches la solution à régénérer. Cette solution peut être constituée de toute manière appropriée connue. Elle peut être formée par exemple par un couple calogène-liquide d'absorption tel que ammoniac/eau ou encore $R_{21}$ = $CHCl_2F$/diéthylène glycol monoacétate = $C_{10}H_{20}O_4$.

La solution froide riche en fluide calogène entrant en 16 ressort en 17 vers un ballon séparateur 18 dans lequel la solution se sépare en une solution liquide 19 appauvrie en calogène et en une phase gazeuse 20 constituée essentiellement par le fluide calogène (c'est-à-dire dans les exemples sus-mentionnés constituée par $NH_3$ ou par $CHCl_2F$).

A la sortie de l'échangeur 12, les fumées passent sans discontinuité en continuant à parcourir le conduit 13 (repéré 13' dans cette partie de la figure) dans un second échangeur 8 constitué de façon similaire à l'échangeur 12 par un conduit 13' logé à l'intérieur d'un conduit 14' de plus grande section. Dans le volume 15' de l'échangeur 8 circulent les retours froids du fluide à chauffer pénétrant en 7 et quittant l'échangeur 8 en 21. L'échangeur 8 formant échangeur récupérateur de chaleur permet d'abaisser considérablement la température des fumées. Dans des conditions habituelles de fonctionnement la vapeur d'eau contenue dans les fumées pourra se condenser au moins en partie comme illustré aux dessins au niveau de la section finale 8a de l'échangeur 8. L'eau de condensation sera éliminée à l'égout comme schématisé en 22, les fumées refroidies étant évacuées en 23 à la cheminée. Avantageusement on pourra prévoir au moins au niveau de la section finale 8a de l'échangeur 8 que le tube intérieur 13' sera intérieurement aileté ou pourvu de saillies analogues pour augmenter le coefficient d'échange et permettre une condensation efficace de la vapeur d'eau avec récupération correspondante de la chaleur de condensation des fumées. Ci-après on décrira seulement très brièvement le fonctionnement général de l'installation qui pour le reste est classique.

Le fluide calogène transformé à l'état gazeux à haute température (habituellement vers 150°C) quitte le bouilleur et vient se condenser dans le condenseur 2 en abandonnant au fluide de chauffage sa chaleur de condensation. Le calogène liquide est alors détendu dans le détendeur 3 et évaporé sous basse pression dans l'évaporateur 4. Cette évaporation nécessite une entrée de chaleur Q qui est empruntée à une source froide, généralement l'air ambiant ou de l'eau puisée dans un puits, un lac ou une rivière. Le calogène gazeux réchauffé au voisinage de la température ambiante est alors absorbé dans l'absorbeur 5 par la solution d'absorption régénérée au niveau du séparateur 18 où elle est puisée en 19. Un échangeur de chaleur 6 permet de refroidir la solution d'absorption appauvrie en calogène avant son entrée dans l'absorbeur 5 et de réchauffer à contre-courant la solution enrichie en calogène sortant de l'absorbeur 5 et entrant dans l'échangeur 12 du régénérateur. Une pompe 24 de solution liquide complète l'installation.

Dans l'exemple montré on a en outre prévu, sur le départ 9 du chauffage après le condenseur 2, de faire passer le fluide à chauffer dans un échangeur supplémentaire 25 à contre-courant avec la solution d'absorption régénérée préparée au séparateur 18, cet échangeur 25 étant donc placé en série sur l'échangeur 6. Habituellement en effet, la solution régénérée d'absorption quitte l'échangeur 6 à une température supérieure à celle de sortie du fluide à chauffer, au moins lorsque les conditions extérieures ne sont pas trop rigoureuses.

Outre le circuit qui vient d'être décrit, l'installation comprend un circuit de dérivation 28 que l'on va décrire maintenant comprenant un échangeur de chaleur supplémentaire 26 et que l'on fera fonctionner lorsque les conditions d'utilisation du circuit de la pompe à chaleur ne seront pas favorables (en particulier par temps froid si l'évaporateur 4 emprunte sa chaleur à l'air ambiant). Dans ce cas, la pompe 24 est arrêtée et une vanne trois voies placée en 27 convenablement orientée permet de faire traverser l'échangeur 26 par la solution chauffée dans le volume 15 de l'échangeur 12 dirigée à la sortie du ballon 18 non plus vers l'échangeur 6 mais directement vers l'échangeur 26 par le circuit de dérivation 28. De la même façon, une vanne trois voies 29 convenablement orientée dirige le fluide à chauffer à la sortie de l'échangeur 8 non plus vers l'absorbeur 5 mais directement vers l'échangeur 26. Dans ces conditions, le bouilleur évaporateur 1 fonctionne comme une chaudière ordinaire, à ceci près que le premier étage 12 d'échange placé sur le circuit des fumées sert à chauffer non pas directement le fluide à chauffer mais un fluide intermédiaire pouvant être porté à plus haute température, ce qui est thermodynamiquement favorable.

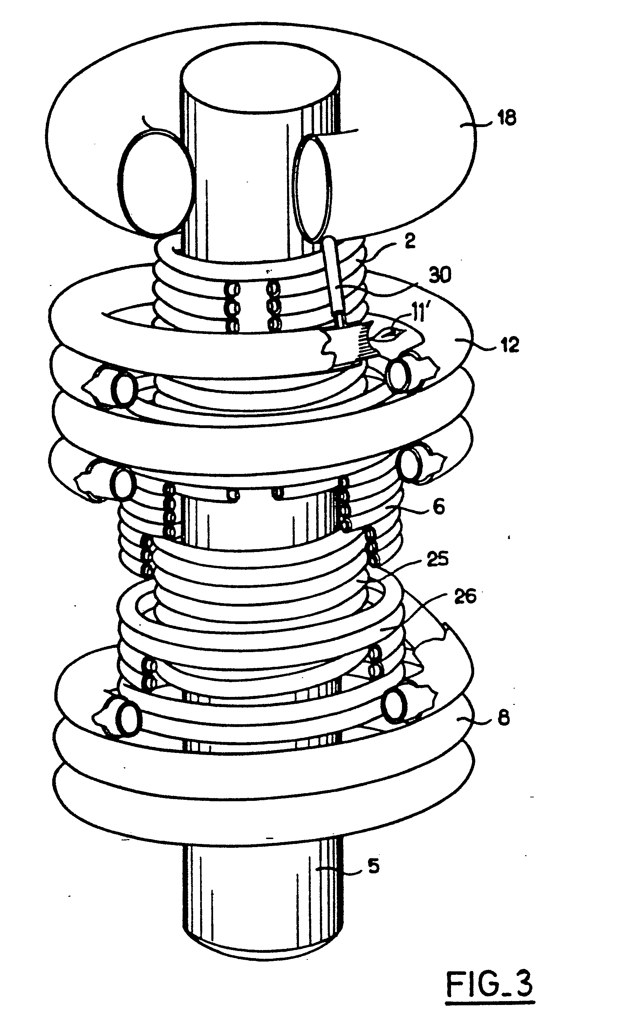

Selon une technologie originale, et comme illustré schématiquement à la figure 3, les différents organes de l'installation et en particulier les échangeurs seront avantageusement constitués par des serpentins s'enroulant en hélice autour d'un noyau central. Avantageusement le noyau sera constitué par l'absorbeur 5 de la pompe à chaleur et les échangeurs du bouilleur 12 de solution et du récupérateur 8 de fluide à chauffer seront formés sur une hélice extérieure tandis que les autres échangeurs tels que condenseur 2, échangeur de solutions 6, échangeur supplémentaire 25, échangeur de chaudière 26 seront formés sur des hélices plus intérieures. Le ballon séparateur 18 pourra être formé par un tore venant coiffer l'ensemble. La chambre de combustion pourra venir en partie supérieure à l'entrée de l'échangeur 12; sur la figure 3, on n'a représenté schématiquement que la flamme 11' brûlant dans la chambre de combustion. Il apparaît qu'une telle technologie permet une construction très compacte et réduit les pertes de chaleur.

Pour ce qui est de l'évaporateur 4, celui-ci sera placé généralement un peu à l'écart et disposé selon les contraintes liées à la nature de la source froide à laquelle la chaleur est empruntée (air ambiant ou eau de puisage ou résiduelle).

A la figure 3 ont été repérés par les mêmes chiffres que dans les figures précédentes les organes correspondants de l'installation. Evidemment des conduits de jonction nécessaires relient comme indiqué au schéma de la figure 1 des différents organes. Pour ne pas surcharger la figure 3 ces jonctions n'ont pas été représentées à l'exception de la jonction 30 reliant le volume du séparateur 18 au volume 15 de l'échangeur 12.

**Revendications**

1. - Installation de chauffage d'un fluide tel par exemple que de l'eau, en particulier pour le chauffage de bâtiments et la production d'eau chaude sanitaire du type comprenant, au moins, un brûleur à combustion solide, liquide et/ou gazeux produisant, dans une chambre de combustion (11), des fumées à température relativement élevées qui sont évacuées; un circuit de pompe à chaleur à absorption dans lequel circule la solution d'absorption et le réfrigérant et comprenant en série un condenseur (2), un évaporateur (4) un absorbeur (5), en soi connus, et un premier échangeur de chaleur (12) formant un premier étage et constituant le bouilleur de la pompe à chaleur placé sur le circuit d'évacuation des fumées et destiné à être rencontré par les fumées produites dans la chambre de combustion (11), pour porter à température élevée d'abord la solution d'absorption; et un circuit de chauffage dudit fluide à chauffer comprenant également en série, outre lesdits absorbeur (5) et condenseur (2), un second échangeur de chaleur (8) formant récupérateur également placé sur le circuit d'évacuation des fumées; ladite installation étant caractérisée en ce que:

- ledit second échangeur de chaleur (8) forme le deuxième et dernier étage rencontré par les fumées sur leur circuit d'évacuation (23), pour réchauffer le fluide à chauffer dès son entrée dans le circuit de chauffage,

- ledit premier échangeur de chaleur (12) est relié, vers l'extrémité d'entrée des fumées, à un ballon séparateur (18) communiquant avec le volume du bouilleur (15) dans lequel est chauffé, au niveau dudit échangeur de chaleur (12), ladite solution d'absorption, et en ce qu'elle comprend:

- un circuit de dérivation (28) de la solution d'absorption qui est disposé en parallèle sur ledit circuit d'absorption entre ledit ballon séparateur (18) et l'entrée (16) dudit premier échangeur de chaleur (12), ledit circuit de dérivation comprenant un échangeur de chaleur supplémentaire (26) qui reçoit, lorsqu'une partie dudit circuit d'absorption est court-circuitée par une première vanne de dérivation (27) située entre ledit échangeur de chaleur supplémentaire (26) et l'entrée (16) dudit premier échangeur de chaleur (12), et lorsqu'une partie dudit circuit de chauffage du fluide à chauffer est également court-circuitée au moyen d'une seconde vanne (29) disposée entre la sortie (21) dudit deuxième échangeur de chaleur (8) et l'échangeur de chaleur supplémentaire (26),

d'une part la solution d'absorption issue dudit ballon séparateur (18),

et d'autre part, le fluide à chauffer à sa sortie dudit second échangeur de chaleur (8).

2. - Installation selon la revendication 1, caractérisé en ce que lesdits échangeurs de chaleur (12, 8) sont disposés immédiatement à la suite l'un de l'autre, les fumées passant sans discontinuité du premier échangeur de chaleur au second.

3. - Installation selon la revendication 1 ou la revendication 2, caractérisée en ce que lesdits échangeurs de chaleur (12, 8) sont constitués chacun par un tube (13, 13') parcouru intérieurement par les fumées, ledit tube étant logé à l'intérieur d'un tube (14, 14') de plus grande section, le volume (15, 15') compris entre les deux tubes étant parcouru respectivement, pour le premier échangeur de chaleur (12) par ladite solution d'absorption, et pour le second échangeur de chaleur (8) par ledit fluide à réchauffer, le tube central (13, 13') se prolongeant de façon continue du premier échangeur au second.

4. - Installation selon la revendication 3, caractérisée en ce que le tube intérieur (13, 13') est pourvu d'ailettes ou analogues au moins vers son extrémité d'évacuation des fumées.

5. - Installation selon l'une des revendications précédentes, caractérisée en ce que les différents échangeurs de chaleur (12, 8, 2, 6, 25, 26) sont constitués par des serpentins s'enroulant en hélice autour d'un noyau (5).

6. - Installation selon la revendication 5, caractérisée en ce que ledit noyau (5) est constitué par l'absorbeur de la pompe à chaleur.

7. - Installation selon la revendication 5, ou la revendication 6, caractérisée en ce que le bouilleur (12) et le récupérateur (8) qui lui fait suite sont formés sur une hélice extérieure tandis que les autres échangeurs de chaleur (2, 6, 25, 26) sont formés sur des hélices plus intérieures.

## Patentansprüche

1. Einrichtung zur Erwärmung eines Fluids, wie beispielsweise Wasser, insbesondere zur Beheizung von Gebäuden und zur Erzeugung von Warmwasser, mit mindestens einem Feststoff-, Flüssigkeits- und/oder Gasbrenner, der in einer Verbrennungskammer (11) Rauchgase mit relativ hoher Temperatur erzeugt, die abgezogen werden; mit einem Absorptionswärmepumpenkreislauf, in dem die Absorptionslösung und das Kühlmittel zirkulieren, und der in Reihe geschaltet einen Kondensator (2), einen Verdampfer (4), einen Absorber (5) (- an sich bekannt -) und einen ersten Wärmetauscher (12) aufweist, der eine erste Stufe bildet, den Aufkocher der Wärmepumpe darstellt, im Strömungsweg der abziehenden Rauchgase angeordnet ist und auf den die in der Verbrennungskammer (11) erzeugten Rauchgase treffen, um vorerst die Absorptionslösung auf höhere Temperatur zu bringen; und mit einem Erwärmungskreislauf für das zu erwärmende Fluid, der gleichermaßen in Reihe geschaltet außer dem Absorber (5) und dem Kondensator (2) einen zweiten, einen Rückgewinnungswärmetauscher bildenden Wärmetauscher (8) aufweist, der gleichermaßen im Strömungsweg der abziehenden Rauchgase angeordnet ist; welche Einrichtung dadurch gekennzeichnet ist, daß

- der zweite Wärmetauscher (8) die zweite und letzte Stufe darstellt, die von den Rauchgasen auf ihrem Abströmweg (23) beaufschlagt wird, um das zu erwärmende Fluid bei seinem Eintritt inden Erwärmungskreislauf zu erwärmen

- der erste Wärmetauscher (12) in Richtung auf das Eintrittsende der Rauchgase mit einem Trenngefäß (18) verbunden ist, das mit dem Raum des Aufkochers (15) in Verbindung steht, in welchem Aufkocher (15) im Bereich des Wärmetauschers (12) die Absorptionslösung erwärmt wird, und daß die Einrichtung folgendes aufweist;

- einen Umlenkungskreislauf (28) für die Absorptionslösung, der parallel zu dem Absorptionskreislauf zwischen das Trenngefäß (18) und den Eingang (16) des ersten Wärmetauschers (12) geschaltet ist, welcher Umlenkkreislauf einen zusätzlichen Wärmetauscher (26) aufweist, der einerseits die von dem Trenngefäß (18) kommende Absorptionslösung und andererseits das zu erwärmende Fluid nach dessen Austreten aus dem zweiten Wärmetauscher aufnimmt, und zwar dann, wenn ein Teil des Absorptionskreislaufs durch ein erstes zwischen dem zusätzlichen Wärmetauscher (26) und dem Eingang (16) des ersten Wärmetauschers (12) gelegenes Umlenkventil kurzgeschlossen ist, und wenn ein Teil des Kreislaufs zur Erwärmung des Fluids mittels eines zweiten, zwischen dem Ausgang (21) des zweiten Wärmetauschers (8) und dem zusätzlichen Wärmetauscher (26) angeordneten Ventils (29) ebenfalls kurzgeschlossen ist.

2. Einrichtung nach Anspruch 1, dadurch gekennzeichnet, daß die Wärmetauscher (12, 8) unmittelbar nacheinender angeordnet sind, und daß die Rauchgase ohne Diskontinuität vom ersten zu dem zweiten Wärmetauscher gelangen.

3. Einrichtung nach Anspruch 1 oder Anspruch 2, dadurch gekennzeichnet, daß die Wärmetauscher (12, 8) jeweils aus einem Rohr (13, 13') bestehen, das innen von den Rauchgasen durchströmt wird, welches Rohr im Innern eines Rohres (14, 14') von größerem Querschnitt angeordnet ist, wobei der Raum (15, 15') zwischen den beiden Rohren beim ersten Wärmetauscher (12) von der Absorptionslösung und beim zweiten Wärmetauscher (8) von dem zu erwärmenden Fluid durchströmt wird und das zentrale Rohr (13, 13') sich kontinuierlich vom ersten zum zweiten Wärmetauscher erstreckt.

4. Einrichtung nach Anspruch 3, dadurch gekennzeichnet, daß das innere Rohr (13, 13') mit Flügeln oder dergleichen mindestens in Richtung auf die Enden des Rauchgasauslasses versehen ist.

5. Einrichtung nach einem der vorhergehenden Ansprüche, dadurch gekennzeichnet daß die verschiedenen Wärmetauscher (12, 8, 2, 6, 25, 26) aus Schlangen bestehen, die wendelförmig um einen Kern (5) gewunden sind.

6. Einrichtung nach Anspruch 5, dadurch gekennzeichnet, daß der Kern (5) aus dem Absorber der Wärmepumpen besteht.

7. Einrichtung nach Anspruch 5 oder Anspruch 6, dadurch gekennzeichnet, daß der Aufkocher (12) und der ihm nachgeschaltete Rückgewinnungswärmetauscher (8) auf einer äußeren Wendel, während die anderen Wärmetauscher (2, 6, 25, 26) auf weiter innenliegenden Wendeln gebildet sind.

## Claims

1. Installation for heating a fluid such as for example water, particularly for the heating of buildings and for producing hot water for domestic purposes and of the type comprising at least one burner for solid, liquid and/or gaseous fuel and producing in a combustion chamber (11) smoke at a relatively high temperature which is then discharged; an absorption-type heat pump circuit in which the absorption solution and the refrigerant circulate and comprising in series a condenser (2), an evaporator (4), an absorber (5), known per se, and a first heat exchanger (12) forming a first stage and constituting the boiler of the heat pump located on the smoke evacuation circuit and intended to be encountered by the smoke produced in the combustion chamber (11) in order to bring firstly the absorption solution to a high temperature, and a circuit for heating the said fluid comprising likewise in series not only the said absorber (5) and condenser (2) but a second heat exchanger (8) forming a recuperator and likewise located on the smoke discharge circuit, the said installation being characterised in that:
- the said second heat exchanger (8) forms the second and last stage encountered by the smoke on its evacuation circuit (25) to heat the fluid upon its entry into the heating circuit,
- the said first heat exchanger (12) is connected towards the smoke inlet end to a separator flask (18) communicating with the space in the boiler (15) in which the said absorption solution is heated at the level of the said heat exchanger (12) and in that it comprises:
- a branching circuit (28) for the absorption solution, disposed in parallel on the said absorption circuit between the said separator flask (18) and the inlet (16) of the said first heat exchanger (12), the said branching circuit comprising a supplementary heat exchanger (26) which, when a part of the said absorption circuit is short circuited by a first branch-off valve (27) situated between the said supplementary heat exchanger (26) and the inlet (16) to the said first heat exchanger (12) and when a part of the said fluid heating circuit is likewise short-circuited by means of a second valve (29) disposed between the outlet (21) from the said second heat exchanger (8) and the supplementary heat exchanger (26) receives on the one hand the absorption solution emanating from the said separating flask (18), and on the other, the fluid which is to be heated as it emerges from the said second heat exchanger (8).

2. Installation according to Claim 1, characterised in that the said heat exchangers (12, 8) are disposed immediately one after the other, the smoke passing from the first heat exchanger to the second without any discontinuity.

3. Installation according to Claim 1 or Claim 2, characterised in that the said heat exchangers (12, 8) are each constituted by a tube (13, 13') through the inside of which the smoke passes, the said tube being housed inside a tube (14, 14') of larger cross-section, the space (15, 15') comprised between the two tubes being traversed respectively, in respect of the first heat exchanger (12) by the said absorption solution and in the case of the second heat exchanger (8) by the said fluid which is to be reheated, the central tube (13, 13') extending continuously from the first heat exchanger to the second.

4. Installation according to Claim 3, characterised in that the internal tube (13, 13') is provided with fins or the like at least towards its smoke discharge end.

5. Installation according to one of the preceding claims, characterised in that the various heat exchangers (12, 8, 2, 6, 25, 26) are constituted by coils extending in a spiral about a core (5).

6. Installation according to Claim 5, characterised in that the said core (5) consists of the heat pump absorber.

7. Installation according to Claim 5 or Claim 6 characterised in that the boiler (12) and the recuperator (8) which follows it are formed on an outer spiral while the other heat exchangers (2, 6, 25, 26) are formed on more inward spirals.

FIG_1

# FIG. 2

0 110 763

FIG_3